# EUROPEAN PATENT SPECIFICATION

(11) **EP 4 064 407 B1**
(45) Date of publication and mention of the grant of the patent: **09.10.2024**
(21) Application number: 21760587.2
(22) Date of filing: 04.02.2021
(51) Int. Cl.: H01M 10/0567, H01M 10/0568, H01M 10/0569, H01M 10/052

(54) **COMPOSITION, ELECTROLYTIC SOLUTION MATERIAL, AND ELECTROLYTIC SOLUTION**
ZUSAMMENSETZUNG, ELEKTROLYTISCHES LÖSUNGSMATERIAL UND ELEKTROLYTLÖSUNG
COMPOSITION, MATÉRIAU DE SOLUTION ÉLECTROLYTIQUE ET SOLUTION ÉLECTROLYTIQUE

(30) Priority: 27.02.2020 JP 2020031795
(43) Date of publication of application: 28.09.2022
(73) Proprietor: Nippon Shokubai Co., Ltd., Osaka-shi, Osaka 541-0043 (JP)
(72) Inventor: OYAMA, Yusuke, Suita-shi, Osaka 564-0034 (JP); ARAKAWA, Motohiro, Suita-shi, Osaka 564-0034 (JP); KOBATAKE, Takayuki, Suita-shi, Osaka 564-0034 (JP); ONODA, Chie, Suita-shi, Osaka 564-0034 (JP)
(74) Representative: Germain Maureau
(86) International application number: PCT/JP2021/004071
(87) International publication number: WO 2021/171948

(56) References cited:
- EP-A1- 3 748 757
- EP-A1- 3 761 435
- EP-A1- 3 979 383
- WO-A1-2010/010613
- WO-A1-2011/149095
- WO-A1-2019/150901
- WO-A1-2019/188207
- WO-A1-2019/229366
- WO-A1-2020/241161
- JP-A- 2010 168 308
- JP-A- 2016 171 080
- JP-A- 2017 503 740
- JP-A- 2020 500 132
- JP-A- 2020 500 133

## Description

### TECHNICAL FIELD

The present disclosure relates to a composition, an electrolytic solution material, and an electrolytic solution.

### BACKGROUND ART

Various electrolytic solution materials, compositions, and the like that can be used for an electrolytic solution or the like have been studied. For example, the present applicant has proposed an electrolytic solution material containing a fluorosulfonylimide salt and an electrolytic solution solvent, in which the concentration of the fluorosulfonylimide salt contained in the electrolytic solution material is 30 mass% or more, and the residual amount of the solvent for production of the fluorosulfonylimide salt in the electrolytic solution material is 3000 ppm or less (Patent Document 1).

In addition, the present applicant discloses a composition containing an electrolyte and a solvent, in which the electrolyte contains a fluorosulfonylimide salt, the solvent contains an organic solvent having a relative permittivity of 10 or less, and further contains an amidosulfuric acid component, in the specification of Japanese Patent Application No. 2019-103361 (published under JP 7 314 264 B).
WO 2019/229366 A1 discloses a composition comprising at least 99.75% by weight of lithium bis(fluorosulfonyl)imide (LiFSI) and acetic acid in a mass content greater than 0 and less than or equal to 400 ppm relative to the total weight of the composition, and the use thereof in association with an organic solvent to prepare an electrolyte solution for a lithium-ion secondary battery.
WO 2019/150901 A1 and JP 2016 171080 A also describe electrolytic solutions for lithium secondary batteries, comprising an organic solvent, LiFSI and a carboxylic acid, such as acetic acid or propionic acid, or a free acid like HF in small concentration.
WO 2019/188207 A1 is directed to an electrolyte solution for lithium-ion secondary battery, comprising LiPF₆ and a lithium sulfamate salt dissolved in a carbonate-based solvent.
WO 2011/149095 A1, JP 2020 500133 A, JP 2020 500132 A, JP 2017 503740 A, JP 2010 168308 A and WO 2010/010613 A1 all refer to methods for the preparation of alkali metal salts of sulfonylimide anions, preferably LiFSI, with low impurity levels, and the use thereof for preparing electrolytic solutions for lithium secondary batteries.

### CITATION LIST

### PATENT DOCUMENT

PATENT DOCUMENT 1: Japanese Unexamined Patent Publication No. 2019-083204

### SUMMARY OF THE INVENTION

### TECHNICAL PROBLEM

A liquid sulfonylimide salt containing a sulfonylimide salt such as a fluorosulfonylimide salt and a solvent was excellent in handleability as compared with a powdery sulfonylimide salt, but had a problem that a decomposition reaction or the like of the sulfonylimide salt proceeded during storage, and as a result, storage stability (a characteristic that the decomposition reaction or the like of the sulfonylimide salt was suppressed even when stored for a long period of time) was poor. With respect to this problem, the electrolytic solution material described in Patent Document 1 and the composition disclosed in JP 7 314 264 B have improved storage stability at room temperature (for example, 25°C). However, there is a demand for a liquid sulfonylimide salt to be stored for a long period of time not only at room temperature but also at a high temperature (for example, 40°C or higher) at which decomposition of the sulfonylimide salt is promoted.

The present disclosure has been made in view of such points, and an object thereof is to provide a composition containing a sulfonylimide salt, which has excellent storage stability even at a high temperature and can be used for an electrolytic solution material or an electrolytic solution.

### SOLUTION TO THE PROBLEM

As a result of intensive studies to solve the above problems, the present inventors have found that the above problems can be solved by containing an acid component having a dissociation constant pKa in a predetermined range as an anion component at a predetermined concentration. The present disclosure is specifically as follows.

A composition according to the present disclosure includes: an electrolyte; a solvent; and an anion component. The electrolyte contains a sulfonylimide salt, the anion component contains an acid component having an acid-dissociation constant pKa (an acid-dissociation constant pKa1 in a first stage for a plurality of ionized acids) of 0 or more and 6.5 or less at a concentration of 50 ppm or more and 10000 ppm or less relative to the electrolyte, a concentration of fluoride ion is 100 ppm or less relative to the electrolyte, and a concentration of sulfate ion is 100 ppm or less relative to the electrolyte. According to the present invention, the anion component is at least one selected from the group consisting of an amidosulfuric acid component, a carbonic acid component, and a phosphoric acid component.

The electrolytic solution material of the present disclosure contains the composition.

The electrolytic solution of the present disclosure is manufactured using the electrolytic solution material.

### ADVANTAGES OF THE INVENTION

According to the present disclosure, a composition containing a sulfonylimide salt, which has excellent storage stability even at a high temperature and can be used for an electrolytic solution material or an electrolytic solution, can be provided.

### DESCRIPTION OF EMBODIMENTS

Hereinafter, embodiments of the present disclosure will be described in detail. The following description of preferred embodiments is merely an example in nature, and is not intended to limit the scope, applications or use of the present disclosure.

### <Composition>

The composition according to the present embodiment contains an electrolyte, a solvent, and an anion component. This composition can be suitably used, for example, for an electrolytic solution. In an application of the composition to the electrolytic solution, at least a portion of the electrolytic solution may be composed by the composition. For example, the composition may be used as it is as the electrolytic solution material, or may be used as an electrolytic solution.

### (Electrolyte)

The composition of the present embodiment contains a sulfonylimide salt as an electrolyte. The sulfonylimide salt is a salt of a sulfonylimide anion and a cation.

Examples of the sulfonylimide anion (sulfonylimide ion) include an anion represented by the following formula (1).

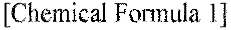

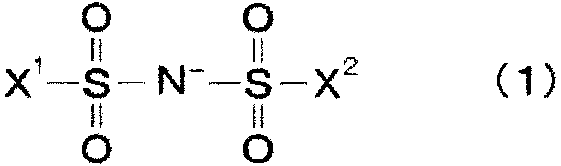

In the formula (1), X¹ and X² are identical or different (each independently) and represent F (fluorine atom) or a fluoroalkyl group with a carbon number of 1 to 6.

Examples of the fluoroalkyl group with a carbon number of 1 to 6 in the formula (1) include one obtained by substituting some or all of the hydrogen atoms contained in an alkyl group with a carbon number of 1 to 6 by fluorine atoms. Specific examples of the fluoroalkyl group with a carbon number of 1 to 6 include a fluoromethyl group, a difluoromethyl group, a trifluoromethyl group, a fluoroethyl group, a difluoroethyl group, a trifluoroethyl group, and a pentafluoroethyl group. For the substituents X¹ and X², a fluorine atom, a trifluoromethyl group, and a pentafluoroethyl group are preferable, a fluorine atom and a trifluoromethyl group are more preferable, and a fluorine atom is still more preferable.

Examples of the cation include a metal cation (a metal ion)[an alkali metal cation (a lithium cation, a sodium cation, a potassium cation, a rubidium cation, a cesium cation, or the like), an alkali earth metal cation (a beryllium cation, a magnesium cation, a calcium cation, a strontium cation, a barium cation, or the like), an aluminum cation, or the like]; an ammonium cation (a quaternary ammonium cation such as a tetraethylammonium cation and a triethylmethylammonium cation, or the like); and a phosphonium cation (a quaternary phosphonium cation such as a tetramethylphosphonium cation, or the like). The kind of the cation can be selected, as appropriate, according to an object to be applied of the composition, or the like. Among the cations, a lithium cation (lithium ion) is preferable from the viewpoint of applying to a lithium ion battery.

Among the sulfonylimide salts, a salt of a sulfonylimide anion represented by the above formula (1) and an alkali metal cation is preferable, and a salt of a sulfonylimide anion represented by the formula (1) and a lithium cation is more preferable, from the viewpoint of an improvement in battery characteristics of a lithium ion battery.

Specific examples of the sulfonylimide salt include a bis(fluorosulfonyl)imide salt [for example, lithium bis(fluorosulfonyl)imide, sodium bis(fluorosulfonyl)imide, potassium bis(fluorosulfonyl)imide, or the like]; a bis(trifluoroalkylsulfonyl)imide salt such as a bis(trifluoromethanesulfonyl)imide salt [for example, lithium bis(trifluoromethanesulfonyl)imide, sodium bis(trifluoromethanesulfonyl)imide, potassium bis(trifluoromethanesulfonyl)imide, or the like]; a bis(fluoro C1-6 alkylsulfonyl)imide salt such as bis(pentafluoroethyl sulfonyl)imide; a (fluorosulfonyl)(fluoroalkylsulfonyl)imide salt such as a (fluorosulfonyl)(trifluoromethanesulfonyl)imide salt; a (fluorosulfonyl)(pentafluoroethylsulfonyl)imide salt; and a (fluorosulfonyl)(fluoro C1-6 alkylsulfonyl)imide salt such as (fluorosulfonyl)(heptafluoropropylsulfonyl)imide [preferably a (fluorosulfonyl)(perfluoro C1-6 alkylsulfonyl)imide salt]. These sulfonylimide salts may be used alone or in combination of two or more thereof. Among the sulfonylimide salts, a bis(fluorosulfonyl)imide salt and a bis(trifluoromethanesulfonyl)imide salt are preferable, lithium bis(fluorosulfonyl)imide and lithium bis(trifluoromethanesulfonyl)imide are more preferable, and lithium bis(fluorosulfonyl)imide are still more preferable from the viewpoint of battery characteristics (such as a cycle characteristic, a rate characteristic, and a low-temperature characteristic).

As the sulfonylimide salt, a commercially available product may be used, or a manufactured product may also be used. Examples of a method of producing a sulfonylimide salt include a method of producing a lithium bis(fluorosulfonyl)imide solution by dissolving a bis(fluorosulfonyl)imide salt such as powdery lithium bis(fluorosulfonyl)imide in a solvent described later; a method of producing a bis(fluorosulfonyl)imide alkali metal salt solution by causing a mixture containing bis(fluorosulfonyl)imide and an alkali metal compound to react in water to prepare an aqueous bis(fluorosulfonyl)imide alkali metal salt solution, and then removing water by a volatilization operation using a carbonate solvent described later; and a method of producing a bis(fluorosulfonyl)imide alkali metal salt solution by causing a mixture containing bis(fluorosulfonyl)imide and an alkali metal compound to react in the solvent.

Bis(fluorosulfonyl)imide can be synthesized by a well-known method. Examples thereof include a method of synthesizing bis(fluorosulfonyl)imide from bis(sulfonyl halide)imide using a fluorinating agent. Examples of the halogen in bis(sulfonyl halide)imide include Cl, Br, I, and At in addition to F.

Hereinafter, a fluorination step for synthesizing bis(fluorosulfonyl)imide from bis(sulfonyl halide)imide using a fluorinating agent will be described. In the fluorination step, a fluorination reaction of bis(sulfonyl halide)imide is carried out. For example, there are the method described in CA2527802, the method described in Jean'ne M. Shreeve et al., Inorg. Chem. 1998, 37(24), 6295-6303, and the like. As the bis(sulfonyl halide)imide which is a starting material, a commercially available product may be used, or a product synthesized by a well-known method may be used. In addition, there is also a method of synthesizing a bis(fluorosulfonyl)imide by using urea and fluorosulfonic acid, described in Japanese Unexamined Patent Publication (Japanese Translation of PCT Application) No. H8-511274.

Examples of the alkali metal compound include oxides such as Li₂O, Na₂O, K₂O, Rb₂O, and CszO; hydroxides such as LiOH, NaOH, KOH, RbOH, and CsOH; carbonates such as Li₂CO₃, Na₂CO₃, K₂CO₃, Rb₂CO₃, and Cs₂CO₃, hydrogen carbonates such as LiHCO₃, NaHCO₃, KHCO₃, RbHCO₃, and CsHCO₃; chlorides such as LiCl, NaCl, KCl, RbCl, and CsCl; fluorides such as LiF, NaF, KF, RbF, and CsF; alkoxide compounds such as CH₃OLi and EtOLi; and alkyl lithium compounds such as EtLi, BuLi, and t-BuLi (Et represents an ethyl group and Bu represents a butyl group).

The content of the sulfonylimide salt (preferably lithium bis(fluorosulfonyl)imide) (the total content when two or more kinds thereof are used together) is preferably 10 mass% or more, more preferably 20 mass% or more, yet more preferably 30 mass% or more, and even more preferably 35 mass% or more relative to the entire composition (relative to 100 mass% of the total amount of the components contained in the composition) from the viewpoint of being capable of applying to a wide range of an electrolytic solution composition when the composition is used as the electrolytic solution material. In addition, the content thereof is preferably 60 mass% or less, more preferably 55 mass% or less, and yet more preferably 50 mass% or less relative to the entire composition from the viewpoint of improving storage stability of the composition even at a high temperature.

In addition, the composition of the present embodiment may contain other electrolyte salt different from the sulfonylimide salt. Examples of the other electrolyte salt include an alkali metal salt of fluorosulfonic acid such as LiFSO₃; an alkali metal salt of trifluoromethane sulfonic acid such as LiCF₃SO₃; an alkali metal salt of perfluoroalkanesulfonylmethide such as LiC(CF₃SO₂)₃; a fluorophosphate such as LiPFₐ(CₘF₂ₘ₊₁)₆₋ₐ (where 0 ≤ a ≤ 6 and 1 ≤ m ≤ 4); an alkali metal perchlorate such as LiClO₄; a fluoroborate such as LiBF_{b}(CₙF₂ₙ₊₁)_{4-b} (where 0 ≤ b ≤ 4 and 1 ≤ n ≤ 4); an alkali metal salt of an oxalatoborate such as LiBOB; a cyanoborate such as lithium tetracyanoborate; and LiAsF₆, LiI, and LiSbF₆. The other electrolyte salts may be used alone or in combination of two or more thereof.

### (Solvent)

The composition of the present embodiment contains a solvent and can also be referred to as a solvent composition. In the solvent composition, the sulfonylimide salt and/or an anion component described later may be present (contained) in an ionic form or may be dissolved.

The solvent can be appropriately selected according to the application or the like of the composition (solvent composition), and may be an aprotic solvent, and may be a solvent in which the sulfonylimide salt can be dissolved.

Examples of the solvent include carbonate solvents, chain ethers, cyclic ethers, chain esters, cyclic esters, alkyl phosphate esters, aliphatic nitriles, aromatic nitriles, sulfones, sulfolanes, nitromethane, 1,3-dimethyl-2-imidazolidinone, 1,3-dimethyl-3,4,5,6-tetrahydro-2(1H)-pyrimidinone, and 3-methyl-2-oxazolidinone. These solvents may be used alone or in combination of two or more thereof.

Examples of the carbonate solvent include a chain carbonate solvent, a saturated cyclic carbonate, an unsaturated cyclic carbonate, and a fluorine-containing cyclic carbonate. Examples of the chain carbonate solvent include dialkyl carbonates with a carbon number of 1 to 4 such as dimethyl carbonate (DMC), ethyl methyl carbonate (EMC), and diethyl carbonate (DEC); alkyl aryl carbonates with a carbon number of 1 to 4 such as methyl phenyl carbonate; and diaryl carbonates such as diphenyl carbonate. Examples of the saturated cyclic carbonate include alkylene carbonates with a carbon number of 2 to 6 such as ethylene carbonate, propylene carbonate, 2,3-dimethyl ethylene carbonate, and 1,2-butylene carbonate; and erythritan carbonate. Examples of the unsaturated cyclic carbonate include alkenylene carbonates such as vinylene carbonate, methylvinylene carbonate, and ethylvinylene carbonate; and 2-vinyl ethylene carbonate. Examples of the fluorine-containing cyclic carbonate include fluoroethylene carbonate, 4,5-difluoroethylene carbonate, and trifluoropropylene carbonate.

Examples of the chain ethers include alkanediol dialkyl ethers such as ethylene glycol dimethyl ether and ethylene glycol diethyl ether; and polyalkanediol dialkyl ethers such as triethylene glycol dimethyl ether and tetraethylene glycol dimethyl ether.

Examples of the cyclic ethers include tetrahydrofurans such as tetrahydrofuran, 2-methyltetrahydrofuran, and 2,6-dimethyltetrahydrofuran; tetrahydropyrans such as tetrahydropyran; dioxanes such as 1,4-dioxane; dioxolanes such as 1,3-dioxolane; and crown ethers.

Examples of the chain esters include aliphatic carboxylic acid esters such as ethyl acetate, isopropyl acetate, butyl acetate, ethyl propionate, and propyl propionate; and aromatic carboxylic acid esters such as methyl benzoate and ethyl benzoate.

Examples of the cyclic esters (or lactones) include esters (carboxylic acid esters) such as γ-butyrolactone, γ-valerolactone, and δ-valerolactone.

Examples of the alkyl phosphate esters include a phosphate esters such as trimethyl phosphate, ethyl dimethyl phosphate, diethyl methyl phosphate, and triethyl phosphate.

Examples of the aliphatic nitriles include acetonitrile, propionitrile, methoxypropionitrile, glutaronitrile, adiponitrile, 2-methylglutaronitrile, valeronitrile, butyronitrile, and isobutyronitrile.

Examples of the aromatic nitriles include benzonitrile and tolunitrile.

Examples of the sulfones include dimethyl sulfone, ethyl methyl sulfone, and diethyl sulfone.

Examples of the sulfolanes include sulfur-containing solvents such as sulfolane, 3-methylsulfolane and 2,4-dimethylsulfolane.

Among the solvents, from the viewpoint of improving storage stability of the composition even at high temperature, a carbonate solvent is preferable, a chain carbonate solvent is more preferable, a dialkyl carbonate with a carbon number of 1 to 4 is still more preferable, dimethyl carbonate (DMC) and ethyl methyl carbonate (EMC) are even more preferable, and dimethyl carbonate (DMC) is still even more preferable.

More specifically, the solvent contains preferably a carbonate solvent, more preferably a chain carbonate solvent, and from the viewpoint of improving storage stability of the composition at a high temperature even when the concentration of the anion component is relatively low (for example, a concentration of 50 ppm or more and 1000 ppm or less relative to the electrolyte), the carbonate solvent is more preferably a chain carbonate solvent (in other words, the carbonate solvent consists of only a chain carbonate solvent), and the solvent particularly preferably consists of only a chain carbonate solvent.

The ratio of the carbonate solvent (preferably a chain carbonate solvent) to the entire solvent is not particularly limited, and may be 10 vol% or more, 20 vol% or more, 30 vol% or more, 40 vol% or more, 50 vol% or more, 60 vol% or more, 70 vol% or more, 80 vol% or more, 90 vol% or more, 95 vol% or more, or 99 vol% or more, or 100 vol% (substantially only a carbonate solvent (preferably substantially only a chain carbonate solvent)), or the like.

When the solvent composition is used as the electrolytic solution material, for example, the solvent composition may be further mixed with the solvent (the solvent composition may be further diluted with the solvent), so that the resultant is used as the electrolytic solution. Examples of the solvent to be mixed with the solvent composition include the carbonate solvent and other solvents. The solvent to be mixed with the solvent composition may be the same as or different from the solvent composing the solvent composition.

### (Anion Component)

The composition of the present embodiment contains, as an anion component, an acid component in which an acid-dissociation constant pKa (acid-dissociation constant pKa1 in the first stage for a plurality of ionized acids) (temperature: room temperature (25°C), solvent: water) is 0 or more and 6.5 or less (hereinafter, also referred to as "specific acid component"). Accordingly, the composition exhibits excellent storage stability at room temperature. In particular, the composition has excellent long-term (longer than 2 months) storage stability even at a high temperature (for example, 40°C or higher). The anion component herein refers to a partial structure (amidosulfate ion in the above example) in a specific acid component such as a specific acid (for example, amidosulfuric acid described below) capable of becoming an anion by ionic dissociation in a solution (solvent composition) or a salt thereof (for example, lithium amidosulfate described below).

The specific acid component has a pKa (pKa1) higher than that of a sulfuric acid (pKa1 = -3) component and the like generated by decomposition of sulfonylimide salt. Examples of the specific acid component used according to the present invention include an amidosulfuric acid (pKa = 1) component, a carbonic acid (pKa1 = 6.1) component, and a phosphoric acid (pKa1 = 1.8) component. The specific acid components may be contained in the composition alone or in combination of two or more thereof. The structure of the specific acid component in the (solvent) composition is not particularly limited, and the specific acid component may be present (contained) in an ionic form (may not be dissolved) or may be dissolved.

Examples of the amidosulfuric acid component (an amidosulfuric acid compound, an amidosulfuric acid-based compound, and amidosulfuric acids) include amidosulfuric acid (sulfamic acid), an amidosulfuric acid derivative, and salts thereof.

The structure of the amidosulfuric acid component is not particularly limited, and may be, for example, a neutral type (H₂NSO₂(OH), HN=SO(OH)₂, or the like) or a zwitterion type (H₃N⁺SO₃⁻, H₂N⁺=SO(OH)O⁻, or the like), or may be a structure containing both these types.

Examples of the amidosulfuric acid derivative include an N-substituted amidosulfuric acid (N-substituted sulfamic acid or the like).

Such an amidosulfuric acid derivative (and a salt thereof) may be a compound (N-substituted amidosulfuric acid and a salt thereof) represented by the following formula (2). The following formula (2) is represented as a neutral type (R¹R²NSO₂(OM)), but may be a zwitterion type, or may include both these types.

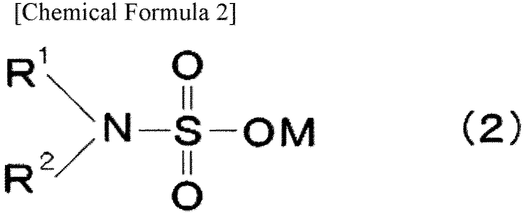

In the formula (2), R¹ and R² each represent H (hydrogen atom), a hydroxyl group, or an alkyl group with a carbon number of 1 to 10, a cycloalkyl group with a carbon number of 3 to 10, an aryl group with a carbon number of 6 to 16, an aralkyl group with a carbon number of 7 to 16, or an alkanoyl group with a carbon number of 2 to 16, which optionally contains a hetero atom, and R¹ and R² optionally form a ring structure. R¹ and R² optionally are identical to or different from each other when being groups described above other than H (when either one of R¹ or R² is H, R¹ and R² are not identical to each other (there is no case where R¹ and R² are both H)). M represents H (hydrogen atom) or a metal atom.

In the formula (2), examples of the alkyl group with a carbon number of 1 to 10 include a methyl group. Examples of the cycloalkyl group with a carbon number of 3 to 10 include a cyclopropyl group. Examples of the aryl group with a carbon number of 6 to 16 include a phenyl group and a naphthyl group. Examples of the aralkyl group with a carbon number of 7 to 16 include a benzyl group and a phenethyl group. Examples of the alkanoyl group with a carbon number of 2 to 16 include a benzoyl group.

These groups may each contain a hetero atom (a nitrogen atom, an oxygen atom, a sulfur atom, a phosphorus atom, and the like). Examples of such a group include a group in which some of the carbon atoms are substituted with a hetero atom, and thiocycloalkyl group (a group corresponding to thiocycloalkane such as thiepane, thiocane, thietane, thiane, and dithiane).

In addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more thereof.

Examples of the metal atom include alkali metal atoms such as lithium, sodium, and potassium; alkali earth metal atoms such as magnesium, calcium, and barium; and aluminum.

Specific examples of the amidosulfuric acid derivative and the salt thereof [N-substituted amidosulfuric acid and a salt thereof (or the compound represented by the formula (2))] include N-hydroxyamidosulfuric acid; N-mono- or di-alkyl amidosulfuric acid [N-methylamidosulfuric acid, N-ethylamidosulfuric acid, N-(1-methylpropyl)amidosulfuric acid, N-(2-methylbutyl)amidosulfuric acid, N-(2,2-dimethylpropyl)amidosulfuric acid, N,N-diethylamidosulfuric acid, N-(3-hydroxypropyl)amidosulfuric acid, N-methyl-N-(2,3-dihydroxypropyl)amidosulfuric acid, N,N-bis(2-hydroxyethyl)amidosulfuric acid, N-(2,3-dihydroxypropyl)amidosulfuric acid, N-(3-methoxy-4-methylphenyl)amidosulfuric acid, N-methyl-N-(2-hydroxy-3-chloropropyl)amidosulfuric acid, N-(2-hydroxy-3-chloropropyl)amidosulfuric acid, N-ethyl-N-(2-hydroxy-3-chloropropyl)amidosulfuric acid, or the like]; N-mono- or di-cycloalkyl amidosulfuric acid (N-cyclohexylamidosulfuric acid, N,N-dicyclohexylamidosulfuric acid, or the like); N-mono- or di-aryl amidosulfuric acid [N-phenylamidosulfuric acid, N-naphthylamidosulfuric acid, N-hydroxy-N-(2-hydroxy-1-naphthyl)amidosulfuric acid, N-(4-bromophenyl)amidosulfuric acid, or the like]; N-mono- or di-aralkyl amidosulfuric acid [N-benzylamidosulfuric acid, N-(β-methylphenethyl)amidosulfuric acid, or the like]; N-alkyl-N-arylamidosulfuric acid (N-ethyl-N-phenylamidosulfuric acid, or the like), N-mono- or di-acyl amidosulfuric acid [N-benzoylamidosulfuric acid, N-(3-chloroalanyl)amidosulfuric acid, N-(3-chloro-3-methylalanyl)amidosulfuric acid, or the like]; and N-thiocycloalkylamidosulfuric acid [N-(thiepane-4-yl)amidosulfuric acid, N-thiocane-4-ylamidosulfuric acid, thiocane-5-ylamidosulfuric acid, N-thietane-3-ylamidosulfuric acid, N-1,3-dithiane-5-ylamidosulfuric acid, N-(thiane-3-yl)amidosulfuric acid, N-(thiolane-3-yl)amidosulfuric acid, or the like], and salts thereof. These amidosulfuric acid derivatives and salts thereof may be used alone or in combination of two or more thereof.

The salt of the amidosulfuric acid component is not particularly limited, and may be, for example, a salt containing amidosulfuric acid or an amidosulfuric acid derivative as either a base or an acid, and may usually be a salt containing amidosulfuric acid or an amidosulfuric acid derivative as an acid (a salt of amidosulfuric acid or amidosulfuric acid derivative with a base).

Specific examples of the salt include alkali metal salts such as a lithium salt, a sodium salt, and a potassium salt; alkaline earth metal salts such as a magnesium salt, a calcium salt, and a barium salt; and metal salts such as an aluminum salt. Among these, an alkali metal salt is preferable, and a lithium salt is more preferable. The salt may also be a salt corresponding to the cation of the electrolyte with which the salt is combined. For example, when a lithium salt is used as the electrolyte, a lithium salt (such as lithium amidosulfate) may be used.

The amidosulfuric acid component may typically contain at least one selected from amidosulfuric acid, an amidosulfuric acid derivative, and an alkali metal salt thereof, and particularly at least one selected from amidosulfuric acid and an alkali metal salt of amidosulfuric acid (for example, lithium amidosulfate).

A carboxylic acid represented by the acetic acid component and a salt thereof may be a compound represented by the following formula (3). This type of acid component is not used according to the present invention.

[Chemical Formula 3]

R³COOM (3)

In the formula (3), R³ represents H (hydrogen atom), an alkyl group with a carbon number of 1 to 10, a cycloalkyl group with a carbon number of 3 to 10, an aryl group with a carbon number of 6 to 16, an aralkyl group with a carbon number of 7 to 16, an alkanoyl group with a carbon number of 2 to 16, which optionally has a substituent and optionally contains a hetero atom. M is the same as defined above.

In the formula (3), examples of the alkyl group with a carbon number of 1 to 10 include a methyl group. Examples of the cycloalkyl group with a carbon number of 3 to 10 include a cyclopropyl group. Examples of the aryl group with a carbon number of 6 to 16 include a phenyl group and a naphthyl group. Examples of the aralkyl group with a carbon number of 7 to 16 include a benzyl group and a phenethyl group. Examples of the alkanoyl group with a carbon number of 2 to 16 include a benzoyl group.

These groups may each contain a hetero atom (a nitrogen atom, an oxygen atom, a sulfur atom, a phosphorus atom, and the like). Examples of such a group include a group in which some of the carbon atoms are substituted with a hetero atom, and thiocycloalkyl group (a group corresponding to thiocycloalkane such as thiepane, thiocane, thietane, thiane, and dithiane).

In addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more thereof.

Specific examples of the carboxylic acid and a salt thereof (or the compound represented by the formula (3)) include a saturated fatty acid (formic acid, acetic acid, propionic acid, butyric acid, or the like), an unsaturated fatty acid (linolenic acid, linoleic acid, oleic acid, or the like), a hydroxy acid (lactic acid, citric acid, salicylic acid, or the like), a dicarboxylic acid (oxalic acid, tartaric acid, phthalic acid, itaconic acid, maleic acid, or the like), an amino acid (glycine, alanine, or the like), and salts thereof. These carboxylic acids and the salts thereof may be used alone or in combination of two or more.

Specific examples of the salts include alkali metal salts (a lithium salt, a sodium salt, a potassium salt, and the like), alkaline earth metal salts (a magnesium salt, a calcium salt, a barium salt, and the like), and an aluminum salt. Among these, an alkali metal salt is preferable, and a lithium salt is more preferable. The salt may also be a salt corresponding to the cation of the electrolyte with which the salt is combined. For example, when a lithium salt is used as the electrolyte, a lithium salt (lithium acetate or the like) may be used.

The carbonic acid component is not particularly limited, and examples thereof include a carbonate and a hydrogen carbonate. The carbonic acid components may be used alone or in combination of two or more.

Specific examples of the salt include alkali metal salts (a lithium salt, a sodium salt, a potassium salt, a rubidium salt, a cesium salt, and the like) and alkaline earth metal salts (a beryllium salt, a magnesium salt, a calcium salt, a strontium salt, a barium salt, and the like). Among these, an alkali metal salt is preferable, and a lithium salt is more preferable. The salt may also be a salt corresponding to the cation of the electrolyte with which the salt is combined. For example, when a lithium salt is used as the electrolyte, a lithium salt (lithium carbonate and the like) may be used.

The phosphoric acid component is not particularly limited, and examples thereof include a phosphate, a hydrogen phosphate, and a dihydrogen phosphate. The phosphoric acid components may be used alone or in combination of two or more thereof.

Specific examples of the salt include alkali metal salts (a lithium salt, a sodium salt, a potassium salt, a rubidium salt, a cesium salt, and the like) and alkaline earth metal salts (a beryllium salt, a magnesium salt, a calcium salt, a strontium salt, a barium salt, and the like). Among these, an alkali metal salt is preferable, and a lithium salt is more preferable. The salt may also be a salt corresponding to the cation of the electrolyte with which the salt is combined. For example, when a lithium salt is used as the electrolyte, a lithium salt (lithium phosphate or the like) may be used.

The composition of the present embodiment contains a specific acid component at a concentration of 50 ppm or more and 10000 ppm or less with respect to the electrolyte (a sulfonylimide salt). Note that, "ppm" herein indicates "ppm by mass".

More specifically, the concentration (ratio) of the specific acid component is 50 ppm or more, preferably 60 ppm or more, and 10000 ppm or less, preferably 9000 ppm or less, more preferably 8000 ppm or less, yet more preferably 7000 ppm or less, and even more preferably 6000 ppm or less, from the viewpoint of improving storage stability of the composition even at a high temperature. When the carbonate solvent contained as the solvent consists of only the chain carbonate solvent or the solvent itself consists of only the chain carbonate solvent, storage stability of the composition at a high temperature is improved even when the concentration of the specific acid component is relatively low. In this case, the upper limit value of the concentration of the specific acid component is preferably 1000 ppm or less, more preferably 500 ppm or less, and yet more preferably 300 ppm or less.

When the specific acid component is a salt (a salt of an acid or a derivative thereof), the ratio may be a ratio in terms of a non-salt form (or a free form, for example, an acid or an acid derivative). In addition, as the salts of the above-described acids and derivatives thereof, commercially available products may be used, or manufactured products may be used.

As described above, it is considered that the composition of the present embodiment is a solvent composition (solution) containing a sulfonylimide salt (electrolyte) and a solvent and further containing a specific acid component (anion component) at a specific ratio, thereby exhibiting not only excellent storage stability at a low temperature such as room temperature (for example, 25°C) but also excellent storage stability even at a high temperature (for example, 40°C or higher) at which decomposition of the sulfonylimide salt is promoted. The reason of this is considered to be that, for example, when the specific acid component is contained in the form of a salt, a salt-exchange is performed between a strong acid component such as a sulfuric acid component generated due to decomposition of the sulfonylimide salt and the salt of the specific acid component. As a result, the strong acid component precipitates as a salt (becomes an insoluble matter). On the other hand, the specific acid component generated by the salt-exchange has a higher pKa (pKa1) (i.e., lower acidity) than the strong acid component. Thus, decomposition of the sulfonylimide salt due to the specific acid component is suppressed or the decomposition rate thereof is reduced. More specifically, when the strong acid component that accelerates decomposition of the sulfonylimide salt forms a salt, the acceleration of the decomposition of the sulfonylimide salt is suppressed. Therefore, it is considered that the strong acid component such as a sulfuric acid component generated by decomposition of the sulfonylimide salt is captured (trapped) by the salt of the specific acid component, thereby improving the storage stability of the solvent composition even at a high temperature.

The specific acid component may be a component (additive) obtained by adding the above-described specific acid or a salt thereof to the solvent composition, or may be a component generated by decomposition of the sulfonylimide salt during synthesis of the sulfonylimide salt. As described above, this specific acid component may be present (contained) in an ionic form or may be dissolved in the solvent composition.

In the composition (solvent composition) of the present embodiment configured as described above, as a result of decomposition of the sulfonylimide salt being suppressed, the concentration of fluoride ion is 100 ppm or less relative to the electrolyte, and the concentration of sulfate ion is 100 ppm or less relative to the electrolyte. The concentrations of fluoride ion and sulfate ion in the solvent composition may preferably be 80 ppm or less, 60 ppm or less, 40 ppm or less, or the like. The solvent composition may be substantially free of fluoride ion and/or sulfate ion (0 ppm) from the viewpoint of improving storage stability even at a high temperature. On the other hand, when the concentrations of fluoride ion and/or sulfate ion exceed 100 ppm relative to the electrolyte, there is a risk that the pH level of the solvent composition is lowered, and as a result, decomposition of the sulfonylimide salt is accelerated.

In addition, the composition (solvent composition) of the present embodiment may contain water at a concentration of 0.1 ppm or more and 1000 ppm or less. The proportion of water in the solvent composition (solvent composition containing water) may be preferably 0.1 ppm or more, more preferably 0.3 ppm or more, or the like, and may also be 0.5 ppm or more, 0.7 ppm or more, 0.8 ppm or more, 1 ppm or more, 1.5 ppm or more, 2 ppm or more, 3 ppm or more, 5 ppm or more, 7 ppm or more, 10 ppm or more, or the like. The upper limit value of the proportion of water in the solvent composition is not particularly limited, and may be, for example, 3000 ppm, 1000 ppm, 900 ppm, 800 ppm, 700 ppm, 600 ppm, 500 ppm, 400 ppm, 300 ppm, 200 ppm, 100 ppm 50 ppm, or the like.

The composition (solvent composition) of the present embodiment may contain another component (a component other than the electrolyte, the solvent, and the anion component) as necessary within a range causing no real harm. The other component can be appropriately selected according to the application of the solvent composition or the like, and examples thereof include additives such as acid anhydrides, namely succinic anhydride, glutaric anhydride, and maleic anhydride for the purpose of improving or enhancing battery characteristics when the solvent composition is used as an electrolytic solution material or an electrolytic solution. These other components may be used alone or in combination of two or more thereof.

When the solvent composition contains the other component, the proportion of the other component may be appropriately determined according to the type and purpose thereof, or the like, and is, for example, 10 mass% or less, 8 mass% or less, 5 mass% or less, 3 mass% or less, or the like.

The pH of the composition (solvent composition) of the present embodiment can be appropriately selected according to the type of electrolyte or the like, and is not particularly limited, but is preferably 5 or more. More specifically, the pH thereof is preferably 5 to 12, more preferably 5 to 11, yet more preferably 5 to 9, or the like. When the pH of the solvent composition is within the above range, decomposition of a constituent component (electrolyte) of the solvent composition, corrosion of a storage container for the solvent composition (and generation of impurities associated therewith), and the like can be efficiently reduced. The pH may be a pH not only during the preparation of the solvent composition but also after a lapse of a predetermined time. If the chain carbonate solvent is selected, a decrease in pH over time can be efficiently suppressed, and as a result, the pH can be maintained in the above range over a long period of time.

### <electrolytic solution material>

The electrolytic solution material according to the present embodiment contains the composition of the present embodiment described above. In other words, the electrolytic solution material containing the electrolyte, the solvent, and the anion component described above is a solution (liquid). The liquid electrolytic solution material may contain only the composition (consist of only the composition), or may further contain, and the composition may contain the above-described electrolyte or solvent, the above-described other component within a range causing no real harm, or the like, as necessary. As the electrolytic solution material, any configuration applied to the composition can be suitably applied.

### < electrolytic solution >

The electrolytic solution according to the present embodiment is manufactured (is used) using the electrolytic solution material of the present embodiment described above. For this electrolytic solution, the electrolytic solution material may be used as it is, or may be diluted by mixing the electrolytic solution material with the solvent described above. The electrolytic solution can be suitably applied to all the configurations applied to the composition of the present embodiment described above.

### [Examples]

Hereinafter, the present disclosure will be described based on Examples. The present disclosure is not limited to the following Examples.

### <<Synthesis Example 1>>

To a slurry obtained by mixing 214 g of lithium carbonate with 600 g of butyl acetate and then cooling the resultant mixture in an ice bath, 1000 g of bis(fluorosulfonyl)imide (manufactured by NIPPON SHOKUBAI CO., LTD.) was added dropwise over 45 minutes. From the cloudy liquid obtained, an insoluble matter was removed with Kiriyama filter paper No. 5C to obtain a solution of lithium bis(fluorosulfonyl)imide (hereinafter, referred to as "LiFSI") in butyl acetate.

To the solution thus obtained, 500 g of water was added, and the resultant mixture was then stirred at room temperature for 10 minutes. After stirring, an aqueous phase separated from a butyl acetate layer (organic phase) was removed to obtain an organic phase. To this organic phase, 100g of 15 mass% aqueous lithium hydroxide (LiOH) solution was added, and the resultant mixture was then stirred at room temperature for 10 minutes. Thereafter, the aqueous phase was further removed from the reaction solution to obtain a solution of LiFSI in butyl acetate.

From the solution of LiFSI in butyl acetate obtained in an extraction step, the reaction solvent was partially distilled off under reduced pressure using a rotary evaporator ("REN-1000" manufactured by IWAKI). Thereafter, the produced insoluble matter was separated by filtration. Thus, 228 g of the solution of LiFSI in butyl acetate (concentration of LiFSI: 43 mass%) was obtained.

Subsequently, 228 g of the obtained solution of LiFSI in butyl acetate was added to a 500-mL separable flask equipped with a dropping funnel, a cooling tube, and a distillate receiver. The pressure in the separable flask was reduced to 667 Pa using a vacuum pump, the separable flask was then immersed in an oil bath heated to 55°C, and the solution in butyl acetate in the separable flask was slowly heated under stirring, to distill butyl acetate as the solvent away. Into the separable flask, 1,2,4-trimethylbenzene was added as a poor solvent, in the same volume amount as the total amount of the liquid collected in the distillate receiver for 10 minutes after the start of the distillation. Thereafter, 1,2,4-trimethylbenzene was continuously added into the separable flask in the same volume as the distillate liquid every 10 minutes to condense the reaction solution while changing the mixing ratio between butyl acetate (reaction solvent) and 1,2,4-trimethylbenzene in the system, and white crystals of lithium bis(fluorosulfonyl)imide was thus precipitated. The above procedure was repeated until the supernatant liquid in the separable flask became transparent, and then, the flask was cooled to a room temperature. The obtained suspension of white crystals of LiFSI was filter to collect the white crystals of LiFSI by filtration. The time from the start of heating the solution in butyl acetate to the end of the condensing step was 6 hours, and the time required until the start of precipitating the white crystals was 2 hours.

Finally, the white crystals of LiFSI thus obtained were washed with a small amount of hexane, transferred to a flat-bottom vat, and dried under reduced pressure at 55°C and 667 Pa for 12 hours. Thus, white crystals of LiFSI (yield: 92.3 g) were obtained.

### <<Synthesis Example 2>>

To a slurry obtained by mixing 32 g of lithium carbonate with 55 g of water and then cooling the resultant mixture in an ice bath, 139 g of bis(fluorosulfonyl)imide (manufactured by NIPPON SHOKUBAI CO., LTD.) was added dropwise over 45 minutes. Thus, 209 g of an aqueous solution containing 68.6 mass% of LiFSI was obtained.

In a 500-mL separable flask equipped with a dropping funnel, a cooling tube, and a distillate receiver, 78 g of dimethyl carbonate (hereinafter referred to as DMC) was added to 209 g of the reaction solution obtained in a lithiation step to prepare a solution of 50 mass% water-containing LiFSI in DMC. The pressure in the separable flask was reduced to 5 kPa using a vacuum pump, and the flask was heated in an oil bath to distill water as the reaction solvent away together with DMC. The same mass of DMC as the total weight of the liquid collected in the distillate receiver over a period of 10 minutes from the start of distillation was added to the separable flask. Thereafter, the same mass of DMC as that of the distillate was continuously added into the separable flask every 10 minutes, thereby changing the mixing ratio of water (reaction solvent) to DMC in a system to dehydrate the solution. When the above procedure was repeated until the water content of the solution of LiFSI in DMC became 53 ppm, the internal temperature remained at 45°C to 60°C and the total amount of DMC added was 3269 g. The suspension thus obtained was filtered. Thus, a colorless transparent solution of 50 mass% LiFSI in DMC was obtained.

### <<Example 1>>

5500 ppm of Lithium amidosulfate as an additive (a salt of a specific acid component) was added to LiFSI (electrolyte) obtained in Synthesis Example 1, and dissolved in ethyl methyl carbonate (hereinafter, referred to as "EMC") as a solvent to produce a solution (solvent composition) having a concentration of LiFSI of 40 mass%.

### <<Example 2>>

A solution was produced in the same manner as in Example 1 except that the amount of lithium amidosulfate added was changed to 1300 ppm.

### <<Example 3>>

A solution was produced in the same manner as in Example 1 except that the amount of lithium amidosulfate added was changed to 200 ppm and DMC was used as the solvent.

### <<Examples 4>>

A solution was produced in the same manner as in Example 1 except that the amount of lithium amidosulfate added was changed to 70 ppm and DMC was used as the solvent.

### <<Comparative Example 1>>

LiFSI obtained in Synthesis Example 1 was dissolved in EMC, thereby producing a solution having a concentration of LiFSI of 40 mass%.

### <<Comparative Example 2>>

100 ppm of lithium amidosulfate as an additive (a salt of a specific acid component) was added to LiFSI containing 152 ppm of fluoride ion and 103 ppm of sulfate ion, and dissolved in DMC, thereby producing a solution having a concentration of LiFSI of 40 mass%.

### <<Reference Example 1>>

LiFSI obtained in Synthesis Example 1 was dissolved in EMC, thereby producing a solution having a concentration of LiFSI of 40 mass%.

### <<Evaluation of Composition>>

Table 1 shows the type of solvent, concentration of LiFSI, concentration of amidosulfate ion, concentration of fluoride ion, concentration of sulfate ion, water content, pH, and presence or absence of peaks derived from decomposition products of LiFSI in ¹⁹F-NMR spectrum (in the column of "NMR peak" in Table 1) of each of the compositions obtained in Examples 1 to 4, Comparative Examples 1 and 2, and Reference Example 1 in production (immediately after production and before storage). In addition, Table 1 shows the pH of each of the compositions and the presence or absence of peaks derived from decomposition products of LiFSI in ¹⁹F-NMR spectra after storage in a sealed container made of PFA (fluororesin) under the storage conditions shown in Table 1.

### [¹⁹F-NMR Measurement]

The concentrations of LiFSI in the reaction solution and each of the compositions were measured by ¹⁹F-NMR. The measurement of ¹⁹F-NMR was performed using "UnityPlus-400" manufactured by Varian (internal standard substance: trifluorotoluene, integration number: 64 times). In addition, ¹⁹F-NMR of each of the compositions before and after storage was measured to determine whether or not any one of two peaks [(1) between 60.0 ppm and 61.0 ppm and (2) between 39.5 ppm and 40.5 ppm] derived from the decomposition products of LiFSI (chemical shift: 55.4 ppm) was detected. The composition in which a peak derived from the decomposition products of LiFSI was not detected was evaluated as "o" (no peak), and the composition in which the peak was detected was evaluated as "x" (peak present).

### [pH Measurement]

Each of the compositions was diluted to 10 folds with a mixture solution of methanol (special grade reagent; manufactured by FUJIFILM Wako Pure Chemical Corporation): ultrapure water (more than 18.2 Ω·cm) = 1 : 8 to prepare a measurement solution, and the pH of each of the compositions was measured using an automatic titrator COM-1700A (manufactured by HIRANUMA Co., Ltd.).

### [Measurement of Water Content]

The water content of each of the compositions was measured using a Karl Fischer Titrator AQ-2000 (manufactured by HIRANUMA Co., Ltd.), with Aqualyte RS-A (manufactured by HIRANUMA Co., Ltd.) as a generator solution and Aqualyte CN (manufactured by HIRANUMA Co., Ltd.) as a counter solution.

### [Measurement by Ion Chromatography]

Each of the compositions was diluted 100 folds with ultrapure water (more than 18.2 Ω·cm) to prepare a measurement solution, and the concentrations of amidosulfate ion, fluoride ion, and sulfate ion contained in each of the compositions were measured using an ion chromatography system ICS-3000 (manufactured by Nippon Dionex K. K.). The measurement conditions are as follows.

### (Measurement Conditions of Ion Chromatography Measurement)

Separation mode: Ion exchange
Eluent: 7 mM to 18 mM aqueous KOH solution
Detector: Conductivity detector
Column: Anion analysis column Ion PAC AS-17C (manufactured by Nippon Dionex K.K.)

**[Table 1]**

| | Composition in Production | | | | | | | | Composition after Storage | | |
|---|---|---|---|---|---|---|---|---|---|---|---|
| | Solvent | LiFSI Concentration (%) | Concentration of Amidosulfate Ion (ppm) | Concentration of Fluoride Ion (ppm) | Concentration of Sulfate Ion (ppm) | Water Content (ppm) | pH | NMR Peak | Storage Condition | pH | NMR Peak |
| Ex. 1 | EMC | 40 | 5500 | 16 | 4 | 43 | 7 | ○ | 40°C for 6 months | 5 | ○ |
| Ex. 2 | EMC | 40 | 1300 | 9 | 0 | 20 | 7 | ○ | 40°C for 5 months | 5 | ○ |
| Ex. 3 | DMC | 40 | 200 | 20 | 8 | 35 | 7 | ○ | 40°C for 4 months | 6 | ○ |
| Ex. 4 | DMC | 40 | 70 | 24 | 0 | 17 | 7 | ○ | 40°C for 4 months | 6 | ○ |
| Comp. Ex. 1 | EMC | 40 | 0 | 26 | 5 | 20 | 7 | ○ | 40°C for 2 months | 4 | × |
| Comp. Ex. 2 | DMC | 40 | 100 | 152 | 103 | 25 | 4 | ○ | 40°C for 1 months | 3 | × |
| Ref. Ex. 1 | EMC | 40 | 0 | 26 | 5 | 20 | 7 | ○ | 25°C for 11 months | 7 | ○ |

As can be seen from the results in Table 1, in each of the compositions of Examples 1 to 4 in which the predetermined amount of lithium amidosulfate was added as the salt of the specific acid component, no peak derived from decomposition products of LiFSI was observed in the ¹⁹F-NMR spectrum after storage at 40°C for 4 months or more. In contrast, in the composition of Comparative Example 1, a peak derived from decomposition products of LiFSI was observed in the ¹⁹F-NMR spectrum after storage at 40°C for 2 months. In addition, for the composition of Reference Example 1 which was prepared in the same manner as in Comparative Example 1 and in which the concentration of each of the components was the same as that in Comparative Example 1, a peak derived from the decomposition products of LiFSI was not observed in the ¹⁹F-NMR spectrum after storage at 25°C for 11 months or more.

Accordingly, it was demonstrated that the compositions of Examples 1 to 4 contained a partial structure (amidosulfate ion) in which the specific acid component (lithium amidosulfate) was ionically dissociated as the anion component at a predetermined concentration (a concentration of 50 ppm or more and 10000 ppm or less relative to the electrolyte); thus, decomposition of LiFSI was reduced and storage stability at a high temperature (for example, 40°C) was good, as compared with the composition of Comparative Example 1 not containing an amidosulfate ion at a predetermined concentration. It was also demonstrated that the composition of Comparative Example 1 had good storage stability at room temperature (for example, 25°C) (Reference Example 1), but had poor storage stability at a high temperature because the decomposition reaction or the like of LiFSI proceeded during storage under a high temperature condition. As can be seen from above, it was demonstrated that the compositions of Examples 1 to 4 can be stored for a long period of time not only at room temperature but also at a high temperature at which decomposition of the sulfonylimide salt is promoted, i.e., have good storage stability even at a high temperature, as compared with the composition of Comparative Example 1 (Reference Example 1).

In addition, in the composition of Comparative Example 2, a peak derived from the decomposition products of LiFSI was observed in the ¹⁹F-NMR spectrum after storage at 40°C for one month, despite containing 100 ppm of amidosulfate ion. Therefore, it was found that the compositions of Examples 1 to 4 contained fluoride ions and/or sulfate ions at a predetermined concentration (a concentration of 100 ppm or less with respect to the electrolyte) during production; therefore, decomposition of LiFSI was suppressed and storage stability were good even at a high temperature, as compared with the composition of Comparative Example 2 containing fluoride ions and/or sulfate ions at a high concentration (a concentration that exceeds 100 ppm with respect to the electrolyte) during production. On the other hand, it was found that, in the composition of Comparative Example 2, the decomposition reaction of LiFSI, and the like proceeded during storage, and storage stability at a high temperature was poor.

### <<Example 5>> (not according to the invention)

1500 ppm of lithium acetate as an additive (a salt of a specific acid component) was added to LiFSI obtained in Synthesis Example 1, and dissolved in EMC to produce a solution (solvent composition) having a concentration of LiFSI of 40 mass%.

### <<Example 6>>

A solution was produced in the same manner as in Example 5 except that lithium acetate was changed to lithium carbonate as an additive.

### <<Example 7>>

A solution was produced in the same manner as in Example 5 except that lithium acetate was changed to lithium phosphate as an additive.

### <<Example 8>>

A solution was produced in the same manner as in Example 5 except that lithium acetate was changed to amidosulfuric acid as an additive.

Table 1 shows the type of solvent, LiFSI concentration, the type of additive and the added amount thereof, concentration of fluoride ion, concentration of sulfate ion, water content, pH, and presence or absence of a peak derived from a decomposition product of LiFSI in ¹⁹F-NMR spectrum (in the column of "NMR peak" in Table 2) of each of the compositions obtained in Examples 5 to 8 during production (immediately after production and before storage). In addition, Table 2 shows the pH of each of the compositions and presence or absence of a ¹⁹F-NMR peak derived from decomposition products of LiFSI in ¹⁹F-NMR spectrum, after storage in a sealed container made of PFA under the storage conditions shown in Table 2. Each of measurement methods, conditions thereof, and evaluation methods are the same as described above. In addition, the results of Comparative Example 1 are also shown in Table 2.

NB : Example 5 is not according to the invention, it is presented for reference only.

**[Table 2]**

| | Composition in Production | | | | | | | | | Composition after Storage | | |
|---|---|---|---|---|---|---|---|---|---|---|---|---|
| | Solvent | LiFSI Concentration (%) | Additive | Amount Added (ppm) | Concentration of Fluoride Ion (ppm) | Concentration of Sulfate Ion (ppm) | Water Content (ppm) | pH | NMR Peak | Storage Condition | pH | NMR Peak |
| Ex. 5 | EMC | 40 | Lithium Acetate | 1500 | 37 | 0 | 38 | 7 | ○ | 40°C for 6 months | 6 | ○ |
| Ex. 6 | EMC | 40 | Lithium Carbonate | 1500 | 26 | 0 | 24 | 7 | ○ | 40°C for 6 months | 6 | ○ |
| Ex. 7 | EMC | 40 | Lithium Phosphate | 1500 | 33 | 0 | 39 | 7 | ○ | 40°C for 5 months | 6 | ○ |
| Ex. 8 | EMC | 40 | Amidosulfuric Acid | 1500 | 25 | 0 | 28 | 7 | ○ | 40°C for 4 months | 6 | ○ |
| Comp. Ex. 1 | EMC | 40 | None | - | 26 | 5 | 20 | 7 | ○ | 40°C for 2 months | 4 | × |

As can be seen from the results shown in Table 2, also in all of the compositions of Examples 5 to 8 in which a lithium salt such as lithium acetate, lithium carbonate, and lithium phosphate or amidosulfuric acid was added at a predetermined amount, no peak derived from decomposition products of LiFSI was observed in the ¹⁹F-NMR spectrum after storage at 40°C for 4 months or more. Accordingly, it was demonstrated that the compositions of Examples 5 to 8 contained a specific acid component such as an acetic acid component, a carbonic acid component, a phosphoric acid component, and an amidosulfuric acid component as an anion component at a predetermined concentration; decomposition of LiFSI was suppressed and storage stability was good even at a high temperature, as compared with the solution of Comparative Example 1 containing no specific acid component.

### INDUSTRIAL APPLICABILITY

As described above, the present disclosure is suitable for a composition that can be used for an electrolytic solution material, an electrolytic solution, or the like.

## Claims

1. A composition comprising:
an electrolyte;
a solvent; and
an anion component, wherein
the electrolyte contains a sulfonylimide salt,
the anion component contains an acid component having an acid-dissociation constant pKa (an acid-dissociation constant pKa1 in a first stage for a plurality of ionized acids) of 0 or more and 6.5 or less at a concentration of 50 ppm or more and 10000 ppm or less relative to the electrolyte, the anion component being at least one selected from the group consisting of an amidosulfuric acid component, a carbonic acid component, and a phosphoric acid component, and
a concentration of fluoride ion is 100 ppm or less relative to the electrolyte, and a concentration of sulfate ion is 100 ppm or less relative to the electrolyte.

2. The composition of claim 1, wherein the solvent contains a carbonate solvent.

3. The composition of claim 2, wherein the carbonate solvent is a chain carbonate solvent.

4. The composition of claim 1, wherein the solvent consists of a chain carbonate solvent.

5. The composition of any one of claims 1 to 4, wherein the electrolyte contains lithium bis(fluorosulfonyl)imide.

6. The composition of any one of claims 1 to 5, wherein water is contained at a concentration of 0.1 ppm or more and 1000 ppm or less relative to the electrolyte.

7. The composition of any one of claims 1 to 6, wherein a content of the sulfonylimide salt is 10 mass% or more relative to the entire composition.

8. The composition of any one of claims 1 to 7, wherein
the amidosulfuric acid component is at least one selected from the group consisting of amidosulfuric acid and a salt thereof, and an amidosulfuric acid derivative and a salt thereof, and
the amidosulfuric acid derivative and a salt thereof are a compound represented by the following general formula (2): 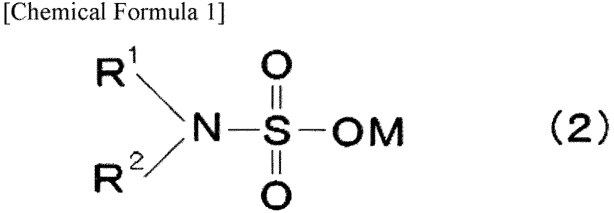 In the formula (2), R¹ and R² each represent H (hydrogen atom), a hydroxyl group, or an alkyl group with a carbon number of 1 to 10, a cycloalkyl group with a carbon number of 3 to 10, an aryl group with a carbon number of 6 to 16, an aralkyl group with a carbon number of 7 to 16, or an alkanoyl group with a carbon number of 2 to 16, which optionally contains a hetero atom, and R¹ and R² optionally form a ring structure, R¹ and R² optionally be identical to or different from each other when being groups described above other than H (when either one of R¹ or R² is H, R¹ and R² are not identical to each other (there is no case where R¹ and R² are both H)), and M represents H (hydrogen atom) or a metal atom.

9. The composition of claim 8, wherein the amidosulfuric acid component is at least one selected from the group consisting of amidosulfuric acid and an alkali metal salt of amidosulfuric acid.

10. The composition of claim 9, wherein the amidosulfuric acid component is an alkali metal salt of amidosulfuric acid.

11. An electrolytic solution material comprising the composition of any one of claims 1 to 10.

12. An electrolytic solution manufactured using the electrolytic solution material of claim 11.

## Patentansprüche

1. Zusammensetzung, umfassend:
einen Elektrolyten;
ein Lösungsmittel; und
eine Anionenkomponente, wobei
der Elektrolyt ein Sulfonylimidsalz enthält,
die Anionenkomponente eine Säurekomponente enthält, die eine Säuredissoziationskonstante pKa (eine Säuredissoziationskonstante pKa1 in einer ersten Stufe für eine Vielzahl von ionisierten Säuren) von 0 oder mehr und 6,5 oder weniger bei einer Konzentration von 50 ppm oder mehr und 10000 ppm oder weniger, relativ zum Elektrolyten, aufweist, wobei die Anionenkomponente mindestens eine Komponente ist, die ausgewählt ist aus der Gruppe, bestehend aus einer Amidoschwefelsäurekomponente, einer Kohlensäurekomponente und einer Phosphorsäurekomponente, und
eine Konzentration von Fluoridion 100 ppm oder weniger relativ zum Elektrolyten ist, und eine Konzentration von Sulfation 100 ppm oder weniger relativ zum Elektrolyten ist.

2. Zusammensetzung nach Anspruch 1, wobei das Lösungsmittel ein Carbonatlösungsmittel enthält.

3. Zusammensetzung nach Anspruch 2, wobei das Carbonatlösungsmittel ein Kettencarbonatlösungsmittel ist.

4. Zusammensetzung nach Anspruch 1, wobei das Lösungsmittel aus einem Kettencarbonatlösungsmittel besteht.

5. Zusammensetzung nach einem der Ansprüche 1 bis 4, wobei der Elektrolyt Lithium-bis(fluorosulfonyl)imid enthält.

6. Zusammensetzung nach einem der Ansprüche 1 bis 5, wobei Wasser in einer Konzentration von 0,1 ppm oder mehr und 1000 ppm oder weniger relativ zum Elektrolyten enthalten ist.

7. Zusammensetzung nach einem der Ansprüche 1 bis 6, wobei der Gehalt des Sulfonylimidsalzes 10 Masse-% oder mehr, relativ zur gesamten Zusammensetzung, ist.

8. Zusammensetzung nach einem der Ansprüche 1 bis 7, wobei
die Amidoschwefelsäurekomponente mindestens eine Komponente ist, die ausgewählt ist aus der Gruppe, bestehend aus Amidoschwefelsäure und einem Salz davon, und einem Amidoschwefelsäurederivat und einem Salz davon, und
das Amidoschwefelsäurederivat und ein Salz davon eine Verbindung ist, die durch die folgende allgemeine Formel (2) dargestellt wird: 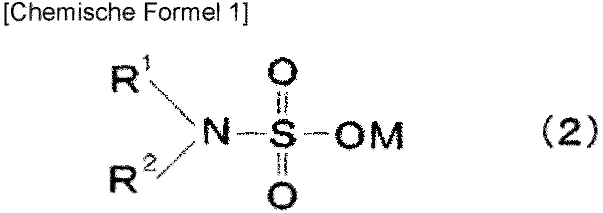 In der Formel (2) stellen R¹ und R² jeweils H (Wasserstoffatom), eine Hydroxylgruppe oder eine Alkylgruppe mit einer Kohlenstoffanzahl von 1 bis 10, eine Cycloalkylgruppe mit einer Kohlenstoffanzahl von 3 bis 10, eine Arylgruppe mit einer Kohlenstoffanzahl von 6 bis 16, eine Aralkylgruppe mit einer Kohlenstoffanzahl von 7 bis 16 oder eine Alkanoylgruppe mit einer Kohlenstoffanzahl von 2 bis 16 dar, die optional ein Heteroatom enthält, und R¹ und R² optional eine Ringstruktur bilden, wobei R¹ und R² optional identisch oder verschieden voneinander sein können, wenn es sich um Gruppen, die oben beschrieben sind und nicht um H handelt (wenn einer der R¹ oder R² H ist, sind R¹ und R² nicht identisch zueinander (es gibt keinen Fall, in dem R¹ und R² beide H sind)), und M H (Wasserstoffatom) oder ein Metallatom darstellt.

9. Zusammensetzung nach Anspruch 8, wobei die Amidoschwefelsäurekomponente mindestens eine Komponente ist, die ausgewählt ist aus der Gruppe, bestehend aus Amidoschwefelsäure und einem Alkalimetallsalz der Amidoschwefelsäure.

10. Zusammensetzung nach Anspruch 9, wobei die Amidoschwefelsäurekomponente ein Alkalimetallsalz der Amidoschwefelsäure ist.

11. Material für eine Elektrolytlösung, umfassend die Zusammensetzung nach einem der Ansprüche 1 bis 10.

12. Elektrolytlösung, hergestellt unter Verwendung des Materials für die Elektrolytlösung nach Anspruch 11.

## Revendications

1. Composition comprenant :
un électrolyte ;
un solvant ; et
un composant anionique, dans laquelle
l'électrolyte contient un sel de sulfonylimide,
le composant anionique contient un composant acide présentant une constante de dissociation des acides pKa (une constante de dissociation des acides pKa1 dans une première étape pour une pluralité d'acides ionisés) supérieure ou égale à 0 et inférieure ou égale à 6,5 à une concentration supérieure ou égale à 50 ppm et inférieure ou égale à 10 000 ppm par rapport à l'électrolyte, le composant anionique étant au moins l'un choisi dans le groupe constitué par un composant acide amidosulfurique, un composant acide carbonique et un composant acide phosphorique, et
une concentration d'ion fluorure est inférieure ou égale à 100 ppm par rapport à l'électrolyte, et une concentration d'ion sulfate est inférieure ou égale à 100 ppm par rapport à l'électrolyte.

2. Composition de la revendication 1, dans laquelle le solvant contient un solvant carbonate.

3. Composition de la revendication 2, dans laquelle le solvant carbonate est un solvant carbonate en chaîne.

4. Composition de la revendication 1, dans laquelle le solvant est constitué d'un solvant carbonate en chaîne.

5. Composition de l'une quelconque des revendications 1 à 4, dans laquelle l'électrolyte contient du bis(fluorosulfonyl)imide de lithium.

6. Composition de l'une quelconque des revendications 1 à 5, dans laquelle l'eau est contenue à une concentration supérieure ou égale à 0,1 ppm et inférieure ou égale à 1000 ppm par rapport à l'électrolyte.

7. Composition de l'une quelconque des revendications 1 à 6, dans laquelle une teneur en sel de sulfonylimide est supérieure ou égale à 10% en masse par rapport à la composition entière.

8. Composition de l'une quelconque des revendications 1 à 7, dans laquelle
le composant acide amidosulfurique est au moins l'un choisi dans le groupe constitué par l'acide amidosulfurique et un sel de celui-ci, et un dérivé d'acide amidosulfurique et un sel de celui-ci, et
le dérivé d'acide amidosulfurique et un sel de celui-ci sont un composé représenté par la formule générale (2) suivante : 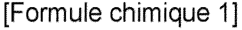 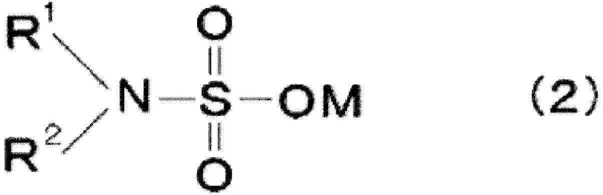 Dans la formule (2), R¹ et R² représentent chacun H (atome d'hydrogène), un groupe hydroxyle ou un groupe alkyle ayant un nombre de carbones de 1 à 10, un groupe cycloalkyle ayant un nombre de carbones de 3 à 10, un groupe aryle ayant un nombre de carbones de 6 à 16, un groupe aralkyle ayant un nombre de carbones de 7 à 16, ou un groupe alcanoyle ayant un nombre de carbones de 2 à 16, qui contient éventuellement un hétéroatome, et R¹ et R² forment éventuellement une structure cyclique, R¹ et R² étant éventuellement identiques ou différents l'un de l'autre lorsqu'ils sont des groupes décrits ci-dessus autres que H (lorsque l'un de R¹ ou R² est H, R¹ et R² ne sont pas identiques l'un à l'autre (il n'existe aucun cas où R¹ et R² sont tous deux H)), et M représente H (atome d'hydrogène) ou un atome métallique.

9. Composition de la revendication 8, dans laquelle le composant acide amidosulfurique est au moins l'un choisi dans le groupe constitué par l'acide amidosulfurique et un sel de métal alcalin de l'acide amidosulfurique.

10. Composition de la revendication 9, dans laquelle le composant acide amidosulfurique est un sel de métal alcalin de l'acide amidosulfurique.

11. Matériau de solution électrolytique comprenant la composition de l'une quelconque des revendications 1 à 10.

12. Solution électrolytique fabriquée en utilisant le matériau de solution électrolytique de la revendication 11.
